# EUROPEAN PATENT SPECIFICATION

(11) **EP 3 385 530 B1**
(45) Date of publication and mention of the grant of the patent: **08.09.2021**
(21) Application number: 16870553.1
(22) Date of filing: 25.11.2016
(51) Int. Cl.: F02M 21/02, F02B 25/04, F02B 25/06, F02B 43/00, F02D 19/02, F02M 69/52, F02B 75/02

(54) **GAS ENGINE**
GASMOTOR
MOTEUR À GAZ

(30) Priority: 30.11.2015 JP 2015233168
(43) Date of publication of application: 10.10.2018
(73) Proprietor: IHI Corporation, Tokyo 135-8710 (JP)
(72) Inventor: HIROSE, Takayuki, Tokyo 135-8710 (JP); YAMADA, Takeshi, Tokyo 135-8710 (JP); TERAMOTO, Jun, Aioi-shi Hyogo 678-0041 (JP)
(74) Representative: TBK
(86) International application number: PCT/JP2016/084989
(87) International publication number: WO 2017/094616

(56) References cited:
- WO-A1-92/11448
- WO-A1-2014/181864
- WO-A1-2015/098970
- JP-A- 2005 163 683
- JP-A- 2005 163 683
- JP-A- 2012 154 188
- JP-A- 2014 118 858
- US-A- 5 546 919
- US-A1- 2012 318 226
- US-A1- 2014 202 428
- US-A1- 2014 352 658

## Description

### [Technical Field]

The present disclosure relates to a dual-fuel gas engine.

### [Background Art]

In uniflow scavenging two-cycle engines which are also used for ship engines, a scavenging port is provided at one end side in the stroke direction of a piston in a cylinder, and an exhaust port is provided in a cylinder cover at another end side thereof. When fuel is combusted in a combustion chamber and a pressed piston moves to a bottom dead center side of the scavenging port, active gas is drawn through the scavenging port into the interior of the cylinder, and the exhaust gas after the fuel combustion is discharged by being pushed out from the exhaust port by the active gas.

In this type of uniflow scavenging two-cycle engine, technology has been developed in which fuel gas which is a gaseous fuel is used as a fuel, and instead of injecting this fuel gas directly into the combustion chamber, the fuel gas is supplied to the cylinder interior from the scavenging port side. For example, in the engine described in JP H03 908 855 A, a mechanism injecting fuel gas into the interior of the scavenging port through the interior of an external wall of the cylinder is provided.

Moreover, a gas engine according to the preamble of claim 1 is known from WO 2015/098970 A1. Further gas engines are disclosed in US 5 546 919 A, WO 92/11448 A1 and JP 2005 163 683 A.

### [Summary of Invention]

### [Technical Problem]

The quantity of fuel gas that is injected is adjusted using the pressure of the fuel gas, and the opening period of the valve of the fuel injection device which is located upstream from the injection port. However, because the pressure of the active gas changes in accordance with the operating state, if the pressure of the fuel gas is set so as to give priority to injecting a desired injection quantity, there is a concern that it becomes difficult for the fuel gas and the active gas to be mixed together.

The present disclosure was conceived in view of the above-described problem, and it is an object thereof to provide a gas engine that is able to inject fuel gas at an appropriate pressure, and to thereby promote the mixing of this fuel gas with an active gas.

### [Solution to Problem]

According to the present invention, the above object is solved with a gas engine having the features of claim 1. Further embodiments are laid down in the dependent claims.

### [Advantageous Effects of Invention]

According to the present disclosure, it is possible to inject fuel gas at an appropriate pressure, and to thereby promote the mixing of this fuel gas with an active gas.

### [Brief Description of Drawings]

FIG. 1 is a view showing the overall structure of a uniflow scavenging two-cycle engine (i.e., a gas engine).
FIG. 2A is a view showing the structure of a fuel injection unit.
FIG. 2B is a view showing the structure of a fuel injection unit.
FIG. 3 is a perspective view showing a lower end portion side (i.e., a bottom dead center side) of the fuel injection units.
FIG. 4A is a view showing an opening degree adjustment unit.
FIG. 4B is a view showing an opening degree adjustment unit.
FIG. 4C is a view showing an opening degree adjustment unit.
FIG. 5 is a view showing a variant example of an opening degree adjustment unit.

### [Description of Embodiments]

Hereinafter, a preferred embodiment of the present disclosure will be described in detail with reference to the appended drawings. Dimensions, materials, and other specific numerical values and the like given in the following embodiment are provided solely for the purpose of simplifying an understanding of the disclosure, and unless it is explicitly stated otherwise, are in no way intended to limit the present disclosure. It should also be noted that component elements having essentially the same functions and structure in the present specification and drawings are given the same descriptive symbols, and any duplicated description thereof is omitted. Additionally, any component elements not directly related to the present disclosure have been omitted from the drawings.

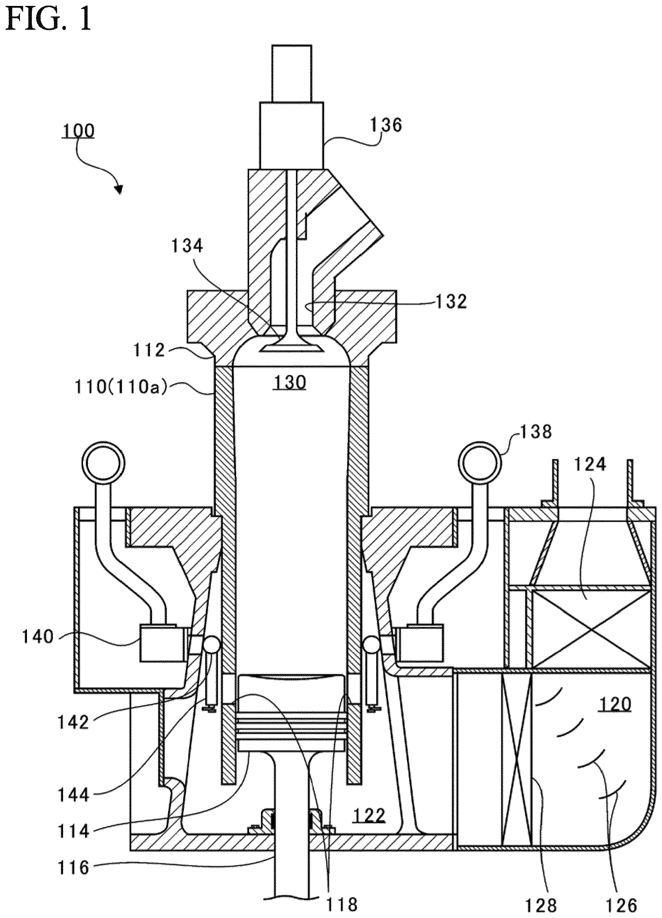

FIG. 1 is a view showing the overall structure of a uniflow scavenging two-cycle engine 100 (i.e., a gas engine). The uniflow scavenging two-cycle engine 100 is used, for example, in a maritime ship or the like. Specifically, the uniflow scavenging two-cycle engine 100 is formed so as to include a cylinder 110, a cylinder cover 112, a piston 114, a piston rod 116, scavenging ports 118, a scavenging reservoir 120, a scavenging chamber 122, a cooler 124, flow rectifying plates 126, a drain separator 128, a combustion chamber 130, an exhaust port 132, an exhaust valve 134, an exhaust valve driving device 136, a fuel gas main pipe 138, a fuel injection device 140, a toroidal pipe 142, and fuel injection units 144.

In the uniflow scavenging two-cycle engine 100, the piston 114 slides up and down inside the cylinder 110 (inside a cylinder liner 110a), and exhaust, intake, compression, combustion, and expansion take place during two strokes, namely, an up stroke and a down stroke of the piston 114. One end of the piston rod 116 is fixed to the piston 114. A crosshead (not shown in the drawings) is coupled to another end of the piston rod 116, and the crosshead moves reciprocatingly together with the piston 114. When the crosshead moves reciprocatingly in association with the reciprocating motion of the piston 114, a crankshaft (not shown in the drawings) rotates in conjunction with this reciprocating motion.

The scavenging ports 118 are holes that penetrate from an inner circumferential surface of the cylinder 110 to an outer circumferential surface thereof, and a plurality of scavenging ports 118 are provided over the entire circumference of the cylinder 110. The scavenging ports 118 open up during the course of the piston 114 towards the bottom dead center, and enables active gas to flow into the interior of the cylinder 110. This active gas contains an oxidizing agent such as oxygen or ozone or the like, or else contains a gaseous mixture thereof (for example, air).

Active gas (for example, air) that has been compressed by a blower (not shown in the drawings) is cooled by the cooler 124 and is sealed inside the scavenging reservoir 120. The flow of this compressed and cooled active gas is rectified by the flow rectifying plates 126 disposed inside the scavenging reservoir 120, and after that, any moisture in the flow of this compressed and cooled active gas is then removed by the drain separator 128.

The scavenging chamber 122 communicates with the scavenging reservoir 120, and also surrounds one end side (the lower side in FIG. 1) in the stroke direction of the piston 114 (hereinafter, this is referred to simply as the 'stroke direction') of the cylinder 110, and the active gas that has undergone compression, cooling, and moisture-removal is guided to the scavenging chamber 122.

Here, the scavenging reservoir 120 and the scavenging chamber 122 form a scavenging space. The scavenging space is a space through which the active gas is guided, and that surrounds a portion on one end side (the lower side in FIG. 1) in the stroke direction of the piston 114 of the cylinder 110. Here, the scavenging reservoir 120 and the scavenging chamber 122 are given as examples of a scavenging space. However, provided that the scavenging space is able to guide the active gas, and provided that the scavenging space surrounds a portion on one end side in the stroke direction of the piston 114 of the cylinder 110, then the scavenging space is not limited to being formed by the scavenging reservoir 120 and the scavenging chamber 122.

The scavenging ports 118 are provided in a portion of the cylinder 110 (i.e., the cylinder liner 110a) that is located inside the scavenging chamber 122, and the scavenging ports 118 open into the scavenging chamber 122. When the piston 114 descends below the scavenging ports 118, the active gas is drawn from the scavenging chamber 122 into the interior of the cylinder 110 via the scavenging ports 118 by the pressure difference between the scavenging chamber 122 and the interior of the cylinder 110.

When the piston 114 is located at the top dead center side, the combustion chamber 130 is formed inside the cylinder 110 as a space enclosed by the cylinder cover 112 (i.e., a cylinder head), the cylinder liner 110a, and the piston 114. The active gas and fuel gas drawn into the cylinder 110 are guided by the piston 114 to the combustion chamber 130.

The exhaust port 132 is formed in the upper side (in FIG. 1) of the combustion chamber 130, and is opened and closed in order to discharge exhaust gas generated when the fuel gas is combusted inside the cylinder 110. The exhaust valve 134 is slid up and down at predetermined timings by the exhaust valve driving device 136, and thereby opens and closes the exhaust port 132. After the fuel gas has been combusted, the exhaust valve 134 is opened, and the exhaust gas inside the cylinder 110 is then pushed out through the exhaust port 132 by the active gas (i.e., scavenging air) flowing in through the scavenging ports 118.

The fuel gas main pipe 138 communicates with a fuel tank (not shown in the drawings), and also communicates with the toroidal pipe 142 via the fuel injection device 140. Fuel gas is guided from the fuel tank into the fuel gas main pipe 138, and when the valve of the fuel injection device 140 is opened, the fuel gas inside the fuel gas main pipe 138 flows into the toroidal pipe 142.

The fuel gas is created by gasifying, for example, LNG (Liquid Natural Gas). However, the fuel gas is not limited to LNG, and it is also possible to use a fuel gas created by gasifying, for example, LPG (Liquid Petroleum Gas), light oil, or heavy oil or the like.

The toroidal pipe 142 disposed on the upper side (in FIG. 1) of the scavenging ports 118 on an outer side in a radial direction of the cylinder 110, and extends toroidally in the circumferential direction of the cylinder 110 so as to encircle the cylinder 110. A plurality of the fuel injection units 144 are fixed to the scavenging port 118 side of the toroidal pipe 142. One fuel injection unit 144 is provided for each scavenging port 118, and extends in the stroke direction.

The fuel injection units 144 face a wall surface of the cylinder 110 between mutually adjacent scavenging ports 118, and fuel injection ports (described below) are formed in portions of the fuel injection units 144 that face this wall surface. Because a plurality of the scavenging ports 118 are provided over the entire circumference of the cylinder 110, a plurality of the fuel injection units 144 (i.e., the fuel injection ports) are also provided in the circumferential direction of the cylinder 110 to correspond to the scavenging ports 118.

The fuel gas flowing into the toroidal pipe 142 is injected through the fuel injection ports into the active gas drawn into the scavenging ports 118. As a result, the fuel gas merges with the flow of active gas, and is drawn inside the cylinder 110 through the scavenging ports 118 while becoming mixed together with the active gas.

Furthermore, a pilot injection valve (not shown in the drawings) is provided in the cylinder cover 112, and an appropriate quantity of fuel oil is injected from the pilot injection valve into the combustion chamber 130 at a desired point in time in the engine cycle. This fuel oil is vaporized by heat from the gas mixture of fuel gas and active gas that has been guided into the combustion chamber 130 and compressed. The fuel oil is vaporized and naturally ignited, and is combusted in a very short time. Consequently, the temperature inside the combustion chamber 130 becomes extremely high, so that the fuel gas guided into the combustion chamber 130 and compressed is combusted. The piston 114 is moved reciprocatingly by the expansion pressure generated by the combustion of the gaseous mixture of, principally, fuel gas and active gas.

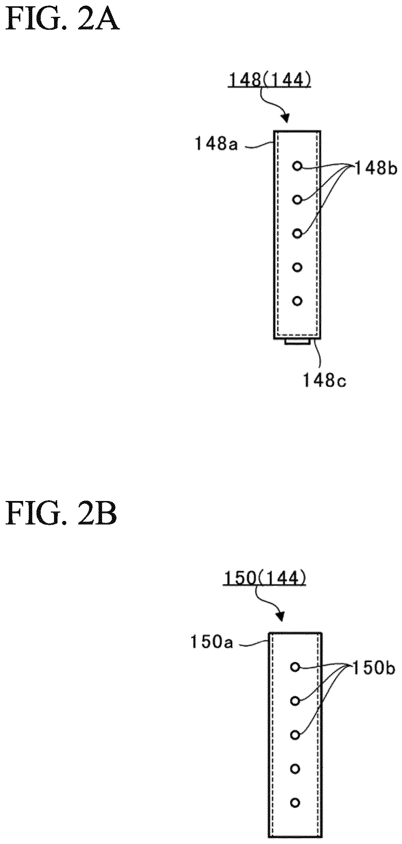

FIGS. 2A and 2B are views showing the structure of the fuel injection units 144. As is shown in FIGS. 2A and 2B, the fuel injection units 144 are formed by an inner pipe 148 and an outer pipe 150. The inner pipe 148 communicates with the toroidal pipe 142, and fuel gas is guided into the interior of a main body 148a of the inner pipe 148 through the toroidal pipe 142.

The inner pipe 148 has inner holes 148b that enable the interior of the main body 148a to communicate with the outside thereof, while the outer pipe 150 has outer holes 150b that enable the interior of a main body 150a to communicate with the outside thereof. A lower end (on the lower side in FIGS. 2A and 2B) of the inner pipe 148 is closed off, while an upper end thereof (on the upper side in FIGS. 2A and 2B) is open.
In contrast, both the upper end and the lower end of the outer pipe 150 are open.

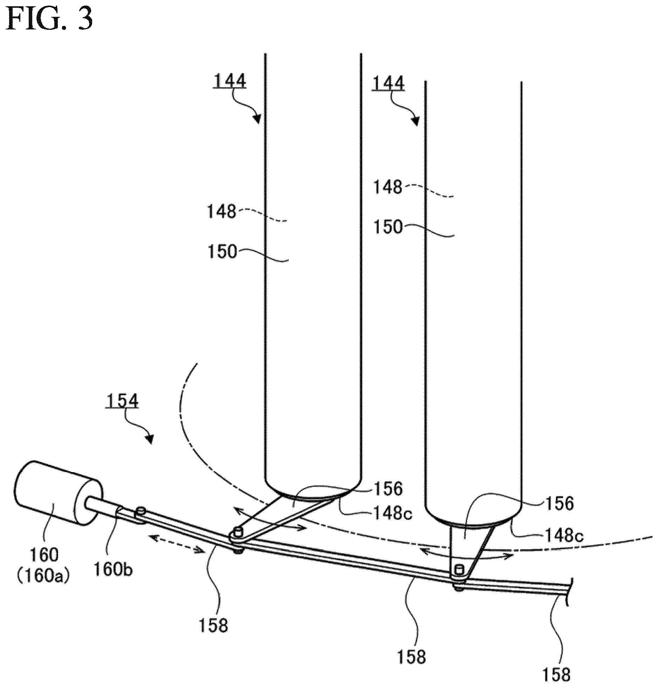

FIG. 3 is a perspective view showing a lower end portion side (i.e., the bottom dead center side) of the fuel injection units 144. As is shown in FIG. 3, the outer pipe 150 houses the inner pipe 148 inside the main body 150a, so that the outer pipe 150 forms a double pipe together with the inner pipe 148.

An opening degree adjustment unit 154 changes the relative position of the inner pipes 148 in the circumferential direction relative to the outer pipes 150. The opening degree adjustment unit 154 has lever portions 156. One end of each lever portion 156 is fixed to a lower end portion 148c of the inner pipe 148, while another end thereof protrudes outwards in a radial direction of the outer pipe 150 from the outer pipe 150.

Coupling rods 158 are rotatably fixed to the other end of the lever portions 156. The coupling rods 158 couple together lever portions 156 mutually adjacent in the circumferential direction of the cylinder 110. Additionally, at least one of the coupling rods 158 is coupled to a shaft 160b that protrudes from a main body 160a of a pressure driving device 160.

The shaft 160b is pressed by pressure inside the main body 160a of the pressure drive device 160 so as to be driven in the directions indicated by the double arrows joined by a broken line in FIG. 3. As a result of this, the coupling rods 158 move in the circumferential direction of the cylinder 110, and the lever portions 156, and the inner pipes 148 fixed to the lever portions 156 are swung (i.e., rotated) via the coupling rods 158, as is shown by the double arrows joined by solid lines in FIG. 3, taking the center axis of the inner pipes 148 as their rotation axis. Because the outer pipes 150 are fixed to the toroidal pipe 142, the inner pipes 148 perform a relative movement in the circumferential direction thereof relative to the outer pipes 150 in conjunction with the swing (i.e., the rotation) of the inner pipes 148.

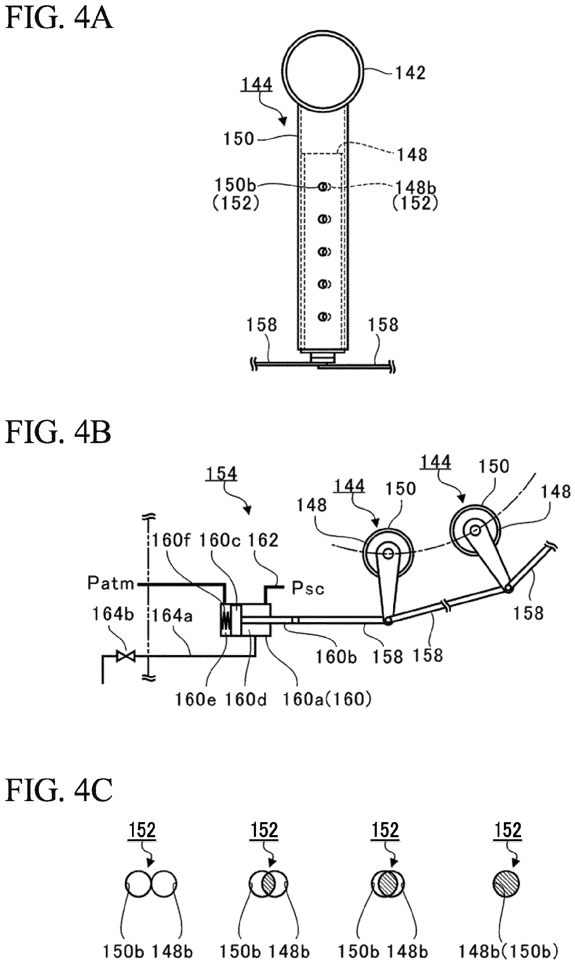

FIGs. 4A to 4C are views showing the opening degree adjustment unit 154. As is shown in FIG. 4A, the positions in the up-down direction in FIG. 4A (i.e., in the stroke direction) of the inner holes 148b in the inner pipe 148 are substantially equal with the positions of the outer holes 150b in the outer pipe 150. Because of this, when the inner pipes 148 are swung in the circumferential direction relatively to the outer pipes 150, as is shown by the hatching areas in FIG. 4C, the surface area of the overlapping portions of the inner holes 148b and the outer holes 150b changes.

In other words, fuel injection ports 152 are formed by the inner holes 148b and the outer holes 150b, and these fuel injection ports 152 are formed when the inner holes 148b and the outer holes 150 are mutually superimposed. As is described above, the fuel injection units 144 are provided on the outer side in the radial direction of the cylinder 110 of the scavenging ports 118. Because of this, the fuel injection ports 152 that are formed in the fuel injection units 144 are also provided on the outer side in the radial direction of the cylinder 110 of the scavenging ports 118 (i.e., are provided outside the cylinder 110).

The opening degree adjustment unit 154 changes the relative position of the inner pipes 148 relative to the outer pipes 150 in the circumferential direction, and enlarges the fuel injection ports 152 by increasing the surface area of the overlapping portions of the inner holes 148b with the outer holes 150b, and reduces the fuel injection ports 152 by decreasing the surface area of the overlapping portions of the inner holes 148b with the outer holes 150b. In this way, the opening degree of the fuel injection ports 152 can be varied by the extent of the overlap of the inner holes 148b and the outer holes 150b.

The opening degree adjustment unit 154 also has a pressure receiving portion 162. The pressure receiving portion 162 receives the scavenging pressure Psc at a position further than the fuel injection ports 152 from the scavenging ports 118 in the scavenging space (i.e., the scavenging reservoir 120 and the scavenging chamber 122) surrounding the cylinder 110.

Specifically, the pressure receiving portion 162 is formed by a pipe. One end of this pipe opens into the scavenging space, while, as is shown in FIG. 4B, another end communicates with the interior of the main body 160a of the pressure driving device 160. Here, the one end of the pressure receiving portion 162 is located at a position which is further than the fuel injection ports 152 from the scavenging ports 118 and where it is less likely than the fuel injection ports 152 to be affected by pressure variations caused by the opening and closing of the scavenging ports 118 by the piston 114, within the scavenging space. Additionally, the internal pressure inside the pressure receiving portion 162 is the same as the scavenging pressure Psc in the substantially constant scavenging air space.

The interior of the main body 160a is hollow, and a drive piston 160c is housed therein. The drive piston 160c partitions the interior of the main body 160a into a first air chamber 160d and a second air chamber 160e. A coil spring 160f is housed in the second air chamber 160e, and presses the drive piston 160c towards the first air chamber 160d side.

The pressure receiving portion 162 communicates with the first air chamber 160d. Additionally, the second air chamber 160e communicates, for example, with the outside of the uniflow scavenging two-cycle engine 100 so that the internal pressure thereof is kept at atmospheric pressure Patm.

Because of this, when the scavenging pressure Psc rises, the drive piston 160c is moved towards the second air chamber 160e side by the pressure inside the first air chamber 160d. Because the shaft 160b is fixed to the drive piston 160c, the shaft 160b moves in conjunction with the movement of the drive piston 160c.

As a result, as is described above, the inner pipes 148 perform a relative movement in the circumferential direction relative to the outer pipes 150 so that the opening degree of the fuel injection ports 152 is changed. In this way, the opening degree adjustment unit 154 changes the opening degree of the fuel injection ports 152 using changes in the differential pressure between the scavenging air pressure Psc received by the pressure receiving portion 162 and the atmospheric pressure Patm. For example, the opening degree adjustment unit 154 increases the opening degree of the fuel injection ports 152 when the scavenging air pressure Psc rises, and decreases the opening degree of the fuel injection ports 152 when the scavenging air pressure Psc falls.

For example, when the scavenging air pressure Psc rises so that it becomes necessary to increase the fuel gas injection quantity, then if the aperture area of the fuel injection ports 152 is too small, it is difficult for the fuel gas to be injected. Consequently, even if an attempt is made to counter this by lengthening the opening period of the valve of the fuel injection device 140, there is a limit on a period in which the scavenging ports 118 may be open for, and a limit on the time length that can be set for the valve opening period. In addition, there is also a limit on the capability of a pump to boost the pressure of the fuel gas.

In contrast, if the aperture area of the fuel injection ports 152 is designed in advance to be large, then even when the scavenging pressure Psc falls so that it becomes necessary to decrease the fuel gas injection quantity, fuel gas is still easily injected from the fuel injection ports 152. Consequently, if this is countered by shortening the opening period of the valve of the fuel injection device 140, since the desired injection quantity is reached within a short injection period, the fuel gas agglomerates within the active gas, and it becomes difficult for the two to properly mix together. Moreover, if this is countered by lowering the pressure of the fuel gas, there is a tendency for the fuel gas to become stagnant inside the inner pipes 148 of the fuel injection units 144. This also results in it becoming difficult for the fuel gas and the active gas to properly mix together.

Therefore, in the present embodiment, as is described above, as a result of the opening degree adjustment unit 154 changing the opening degree of the fuel injection ports 152 in accordance with the scavenging pressure Psc, it becomes possible to inject the fuel gas at an appropriate pressure, and to thereby promote the mixing of this fuel gas with an active gas.

Moreover, the opening degree adjustment unit 154 changes the opening degree of the housed fuel injection ports 152 by moving the drive piston 160c housed inside the main body 160a using changes in the differential pressure between the scavenging air pressure Psc received by the pressure receiving portion 162 and the atmospheric pressure Patm, and thereby causing the shaft 160b to move in conjunction with the movement of the drive piston 160c. Because of this, faults occur less frequently compared to an electrical mechanism, and durability can be improved.

Furthermore, the fuel injection units 144 are formed by the inner pipe 148 and the outer pipe 150, and the opening degree of the fuel injection ports 152 can be varied by overlapping of the mutual superimposition of the inner holes 148b and the outer holes 150b. Because of this, it is possible, by means of a simple structure, to achieve fuel injection units 144 in which the fuel injection ports 152 have a variable opening degree.

Moreover, the inner pipes 148 and the outer pipes 150 rotate relatively to each other in the circumferential direction so as to alter the opening degree of the fuel injection ports 152. Because of this, altering the opening degree is possible essentially without having to change the position in the stroke direction of the fuel injection ports 152.

Additionally, if the scavenging pressure Psc becomes approximately the same as the atmospheric pressure Patm while the uniflow scavenging two-cycle engine 100 is stopped, the drive piston 160c is pressed by the coil spring 160f so as to be moved to the first air chamber 160d side. At this time, since the inner holes 148b and the outer holes 148b are designed so as to not overlap by being apart from each other (i.e., to be mutually offset) in the circumferential direction, the fuel injection ports 152 are closed. Because of this, it is difficult for the fuel gas inside the fuel injection units 144 to leak into the scavenging chamber 122, so that safety is consequently improved

Furthermore, a pipe 164a that communicates with the outside air is connected to the first air chamber 160d, and an emergency shut-off valve 164b is provided on this pipe 164a. The emergency shut-off valve 164b is formed, for example by an electromagnetic valve and, at normal times, the emergency shut-off valve 64b is closed. If it becomes necessary to implement an emergency shut-down of the uniflow scavenging two-cycle engine 100, the emergency shut-down valve 164b is opened. As a result, the pressure inside the first air chamber 160d is reduced, and the drive piston 160c is moved to the first chamber 160d side by the coil spring 160f. In this way, the fuel injection ports 152 can be rapidly closed, and the injection of fuel gas from the fuel injection ports 152 can be stopped, thereby improving safety.

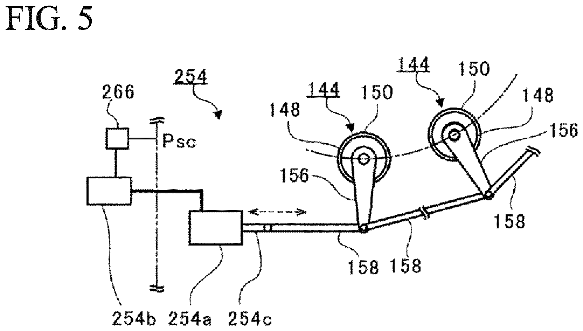

FIG. 5 is a view showing a variant example of an opening degree adjustment unit. In the above-described embodiment, a case is described in which the opening degree adjustment unit 154 mechanically changes the opening degree of the fuel injection ports 152 in accordance with the scavenging pressure Psc. However, in the variant example, an opening degree adjustment unit 254 electrically adjusts the opening degree of the fuel injection ports 152 in accordance with the values of parameters that vary with the scavenging pressure Psc.

Specifically, the uniflow scavenging two-cycle engine 100 has a data acquisition unit 266. The data acquisition unit 266 is formed, for example, by sensors, and, in the same way as the pressure receiving portion 162, is disposed at a position further than the fuel injection ports 152 from the scavenging ports 118 in the scavenging space. The data acquisition unit 266 acquires (i.e., detects) the scavenging pressure Psc in the substantially constant scavenging air space, and converts it into an electrical signal. In other words, in the example shown in FIG. 5, an electrical signal into which the scavenging pressure Psc is converted is then used as a parameter.

The opening degree adjustment unit 254 is formed so as to include an actuator 254a, and a control unit 254b. The control unit 254b receives electrical signals from the data acquisition unit 266, and controls the actuator 254a in accordance with values shown by the received electrical signals.

A shaft 254c that is attached to the actuator 254a is moved by the actuator 254a in the directions indicated by the double arrows joined by a broken line in FIG. 5. As a result, in the same way as in the above-described embodiments, the inner pipes 148 are moved relatively in the circumferential direction thereof relative to the outer pipes 150 via the lever portions 156 and the coupling rods 158 that are coupled to the shaft 254c.

In this way, in the same way as in the above-described embodiment, as a result of the opening degree adjustment unit 254 moving the inner pipes 148 using the actuator 254a, it is possible to inject fuel gas at an appropriate pressure, and to thereby promote the mixing of fuel gas with an active gas. Additionally, because operations of the actuator 254a are performed via electrical control, the amount of movement of the inner pipes 148 in the circumferential direction thereof can be easily set.

For example, in the above described variant example, an electrical signal obtained as a result of a sensor detecting the scavenging pressure Psc and converting this into an electrical signal is described as an example of a parameter that varies together with the scavenging pressure Psc. However, it is sufficient for the parameter to be a value that varies together with the scavenging pressure Psc, and, for example, the engine revolution speed, the engine load, the engine torque, and the blower wind speed and the like may also be used.

Furthermore, in the above-described embodiment and variant example, a case is described in which the opening degree adjustment units 154 and 254 increase the opening degree of the fuel injection ports 152 when the scavenging air pressure Psc rises, and decrease the opening degree of the fuel injection ports 152 when the scavenging air pressure Psc falls. However, it is sufficient if the opening degree adjustment units 154 and 254 at least change the opening degree of the fuel injection ports 152 in accordance with the values of parameters changing with the scavenging pressure Psc, or in accordance with the scavenging pressure Psc.

Moreover, in the above-described embodiment, a case is described in which the pressure receiving portion 162 receives the scavenging pressure Psc at a position in the scavenging space that is further than the fuel injection ports 152 from the scavenging ports 118. However, the pressure receiving portion 162 may also be situated closer than the fuel injection ports 152 to the scavenging ports 118 provided that the pressure receiving portion 162 is able to receive the scavenging pressure Psc. Then, if the pressure receiving portion 162 receives the scavenging pressure Psc at a position further than the fuel injection ports 152 from the scavenging ports 118 in the scavenging space, it is difficult for the pressure receiving portion 162 to be affected by the flow of active gas generated by the opening and closing of the scavenging ports 118, and the opening degree of the fuel injection ports 152 can be stabilized at an appropriate size.

Furthermore, in the above-described embodiment and variant example, a case is described in which the fuel injection units 144 are formed by a double pipe, namely, by the inner pipe 148 and the outer pipe 150, and the fuel injection ports 152 are formed by the inner holes 148b of the inner pipe 148 and the outer holes 150b of the outer pipe 150. However, in some examples (not part of the invention),
it is also possible to omit the inner pipe 148 and the outer pipe 150, and to enable the opening degree of the fuel injection ports 152 to be varied using some other mechanism.

Moreover, in the above-described embodiment and variant example, a case is described in which, in the fuel injection units 144, the opening degree of the fuel injection ports 152 is altered by the inner pipe 148 and the outer pipe 150 rotating in the circumferential direction relatively to each other. However, it is also possible for the opening degree of the fuel injection ports 152 to be altered by the inner pipe 148 and the outer pipe 150 moving in the stroke direction relatively to each other.

Furthermore, in the above-described embodiment and variant example, a case is described in which the inner holes 148b and the outer holes 150b have the same circular shape. However, it is also possible for either one of or both of the inner holes 148b and the outer holes 150b to have another shape.

### [Industrial Applicability]

The present disclosure can be used in a dual-fuel gas engine.

### [Reference Signs List]

- 100: Uniflow scavenging two-cycle engine (Gas engine)
- 110: Cylinder
- 118: Scavenging ports
- 120: Scavenging reservoir (Scavenging space)
- 122: Scavenging chamber (Scavenging space)
- 132: Exhaust port
- 144: Fuel injection units
- 152: Fuel injection ports
- 148: Inner pipe
- 148b: Inner holes
- 150: Outer pipe
- 150b: Outer holes
- 154: Opening degree adjustment unit
- 162: Pressure receiving portion
- 254: Opening degree adjustment unit
- 254a: Actuator
- 266: Data acquisition unit

## Claims

1. A gas engine (100) in which active gas flows into an interior of a cylinder (110) through scavenging ports (118), and fuel gas that has been mixed with the active gas is combusted, the gas engine (100) comprising:
fuel injection units (144) each of that includes fuel injection ports (152) located on an outer side of the cylinder (110), and that inject fuel gas through the fuel injection ports (152) into the active gas drawn into the cylinder (110) through the scavenging ports (118); and
an opening degree adjustment unit (154) that mechanically or electrically changes an opening degree of the fuel injection ports (152) in accordance with a value of a parameter that varies together with a scavenging pressure (Psc), or in accordance with the scavenging pressure (Psc),
**characterized in that**
a fuel gas main pipe (138) communicates with a fuel tank, and also communicates with a toroidal pipe (142) via a fuel injection device (140),
when a valve of the fuel injection device (140) is opened, the fuel gas inside the fuel gas main pipe (138) flows into the toroidal pipe (142),
the toroidal pipe (142) is disposed on an upper side of the scavenging ports (118) on an outer side in a radial direction of the cylinder (110), and extends toroidally in a circumferential direction of the cylinder (110) so as to encircle the cylinder (110),
the fuel injection units (144) are fixed to the scavenging port (118) side of the toroidal pipe (142),
the fuel injection units (144) are provided with:
an inner pipe (148) in which inner holes (148b) are formed, the inner holes (148b) penetrating from an internal portion of the inner pipe (148) to an external portion thereof, and the inner pipe (148) in which fuel gas is guided to the internal portion through the toroidal pipe (142); and
an outer pipe (150) in which outer holes (150b) are formed, the outer holes (150b) penetrating from an internal portion of the outer pipe (150) to an external portion thereof, and the outer pipe (150) internally housing the inner pipe (148) and forming a double pipe together with the inner pipe (148),
the fuel injection ports (152) are formed by the inner holes (148b) and the outer holes (150b), and
the opening degree can be varied using a mutual overlap of the inner holes (148b) and the outer holes (150b).

2. The gas engine (100) according to claim 1, wherein the opening degree adjustment unit (154) increases the opening degree of the fuel injection ports (152) when the scavenging air pressure (Psc) rises, and decreases the opening degree of the fuel injection ports (152) when the scavenging air pressure (Psc) falls.

3. The gas engine (100) according to claim 1, further comprising:
a pressure receiving portion (162) that receives scavenging pressure at a position within a scavenging space, the position being further than the fuel injection ports (152) from the scavenging ports (118), and a scavenging space surrounding a portion of the cylinder (110) and through which compressed active gas is guided, and
the opening degree adjustment unit (154) changes the opening degree of the fuel injection ports (152) using differential pressure changes between an atmospheric pressure and the scavenging pressure received by the pressure receiving portion (162).

4. The gas engine (100) according to claim 2, further comprising:
a pressure receiving portion (162) that receives scavenging pressure at a position within a scavenging space, the position being further than the fuel injection ports (152) from the scavenging ports (118), and the scavenging space surrounding a portion of the cylinder (110) and through which compressed active gas is guided, and
the opening degree adjustment unit (154) changes the opening degree of the fuel injection ports (152) using differential pressure changes between an atmospheric pressure and the scavenging pressure received by the pressure receiving portion (162).

5. The gas engine (100) according to claim 1, further comprising:
a data acquisition unit (266) that acquires the value of the parameter, and
the opening degree adjustment unit (154) has an actuator that changes the opening degree of the fuel injection ports (152) in accordance with the value of the parameter acquired by the data acquisition unit (266).

6. The gas engine (100) according to claim 2, further comprising:
a data acquisition unit (266) that acquires the value of the parameter, and
the opening degree adjustment unit (154) has an actuator that changes the opening degree of the fuel injection ports (152) in accordance with the value of the parameter acquired by the data acquisition unit (266).

7. The gas engine (100) according to claim 3, wherein the inner pipe (148) and the outer pipe (150) are adapted to rotate relatively to each other in a circumferential direction and to alter the opening degree of the fuel injection ports (152).

## Patentansprüche

1. Gaskraftmaschine (100), in der ein Arbeitsgas in ein Inneres eines Zylinders (110) durch Spülöffnungen (118) strömt und ein Brenngas, das mit dem Arbeitsgas vermischt wurde, verbrannt wird, wobei die Gaskraftmaschine (100) Folgendes aufweist:
Brennstoffeinspritzeinheiten (144), von denen jede Brennstoffeinspritzöffnungen (152) umfasst, die auf einer Außenseite des Zylinders (110) angeordnet sind, und die Brenngas durch die Brennstoffeinspritzöffnungen (152) in das Arbeitsgas einspritzen, das in den Zylinder (110) durch die Spülöffnungen (118) gesaugt wird; und
eine Öffnungsgradeinstelleinheit (154), die einen Öffnungsgrad der Brennstoffeinspritzöffnungen (152) in Übereinstimmung mit einem Wert eines Parameters mechanisch oder elektrisch ändert, der sich zusammen mit einem Spüldruck (Psc) oder in Übereinstimmung mit dem Spüldruck (Psc) ändert,
**dadurch gekennzeichnet, dass**
ein Brenngashauptrohr (138) mit einem Brennstoffbehälter in Verbindung ist und auch mit einem torusförmigen Rohr (142) über eine Brennstoffeinspritzvorrichtung (140) in Verbindung ist,
wenn ein Ventil der Brennstoffeinspritzvorrichtung (140) offen ist, das Brenngas in dem Brenngashaupttor (138) in das torusförmige Rohr (142) strömt,
das torusförmige Rohr (142) auf einer oberen Seite der Spülöffnungen (118) auf einer Außenseite in einer Radialrichtung des Zylinders (110) angeordnet ist und sich in einer Umfangsrichtung des Zylinders (110) torusförmig erstreckt, um den Zylinder (110) zu umgeben,
die Brennstoffeinspritzeinheiten (144) auf einer Seite der Spülöffnung (118) des torusförmigen Rohrs (142) fixiert sind,
die Brennstoffeinspritzeinheiten (144) mit Folgendem versehen sind:
einem Innenrohr (148), in dem Innenlöcher (148b) ausgebildet sind, wobei die Innenlöcher (148b) von einem Innenabschnitt des Innenrohrs (148) zu dessen Außenabschnitt durchdringen, und wobei Brenngas in dem Innenrohr (148) zu dem Innenabschnitt durch das torusförmige Rohr (142) geleitet wird; und
einem Außenrohr (150), in dem Außenlöcher (150b) ausgebildet sind, wobei die Außenlöcher (150b) von einem Innenabschnitt des Außenrohrs (150) zu dessen Außenabschnitt durchdringen, und wobei das Außenrohr (150) das Innenohr (148) innen aufnimmt und ein Doppelrohr zusammen mit dem Innenrohr (148) ausbildet,
die Brennstoffeinspritzöffnungen (152) durch die Innenlöcher (148b) und die Außenlöcher (150b) ausgebildet sind, und
der Öffnungsgrad unter Verwendung eines gegenseitigen Überlappens der Innenlöcher (148b) und der Außenlöcher (150b) verändert werden kann.

2. Gaskraftmaschine (100) nach Anspruch 1, wobei die Öffnungsgradeinstelleinheit (154) den Öffnungsgrad der Brennstoffeinspritzöffnungen (152) erhöht, wenn der Spülluftdruck (Psc) steigt, und den Öffnungsgrad der Brennstoffeinspritzöffnungen (152) verringert, wenn der Spülluftdruck (Psc) fällt.

3. Gaskraftmaschine (100) nach Anspruch 1, ferner mit:
einem Druckaufnahmeabschnitt (162), der einen Spüldruck an einer Position in einem Spülraum aufnimmt, wobei die Position weiter von den Spülöffnungen (118) ist als die Brennstoffeinspritzöffnungen (152), und wobei ein Spülraum einen Abschnitt des Zylinders (110) umgibt und wobei durch diesen verdichtetes Arbeitsgas geleitet wird, und
die Öffnungsgradeinstelleinheit (154) den Öffnungsgrad der Brennstoffeinspritzöffnungen (152) unter Verwendung von Differenzdruckänderungen zwischen einem Umgebungsdruck und dem Spüldruck ändert, der durch den Druckaufnahmeabschnitt (162) aufgenommen wird.

4. Gaskraftmaschine (100) nach Anspruch 2, ferner mit:
einem Druckaufnahmeabschnitt (162), der einen Spüldruck an einer Position in einem Spülraum aufnimmt, wobei die Position weiter von den Spülöffnungen (118) ist als die Brennstoffeinspritzöffnungen (152), und wobei der Spülraum einen Abschnitt des Zylinders (110) umgibt und wobei durch diesen verdichtetes Arbeitsgas geleitet wird, und
die Öffnungsgradeinstelleinheit (154) den Öffnungsgrad der Brennstoffeinspritzöffnungen (152) unter Verwendung von Differenzdruckänderungen zwischen einem Umgebungsdruck und dem Spüldruck ändert, der durch den Druckaufnahmeabschnitt (162) aufgenommen wird.

5. Gaskraftmaschine (100) nach Anspruch 1, ferner mit:
einer Datenerlangungseinheit (266), die den Wert des Parameters erlangt, und
wobei die Öffnungsgradeinstelleinheit (154) einen Aktor hat, der den Öffnungsgrad der Brennstoffeinspritzöffnungen (152) in Übereinstimmung mit dem Wert des Parameters ändert, der durch die Datenerlangungseinheit (266) erlangt wird.

6. Gaskraftmaschine (100) nach Anspruch 2, ferner mit:
einer Datenerlangungseinheit (266), die den Wert des Parameters erlangt, und
wobei die Öffnungsgradeinstelleinheit (154) einen Aktor hat, der den Öffnungsgrad der Brennstoffeinspritzöffnungen (152) in Übereinstimmung mit dem Wert des Parameters ändert, der durch die Datenerlangungseinheit (266) erlangt wird.

7. Gaskraftmaschine (100) nach Anspruch 3, wobei das Innenohr (148) und das Außenrohr (150) eingerichtet sind, bezüglich einander in einer Umfangsrichtung zu drehen und den Öffnungsgrad der Brennstoffeinspritzöffnungen (152) zu ändern.

## Revendications

1. Moteur à gaz (100) dans lequel du gaz actif s'écoule dans un intérieur d'un cylindre (110) par des orifices de balayage (118), et le gaz combustible qui a été mélangé avec le gaz actif est brûlé, le moteur à gaz (100) comprenant :
des unités d'injection de combustible (144), dont chacune comprend des orifices d'injection de combustible (152) positionnés sur un côté externe du cylindre (110) et qui injectent du gaz combustible par les orifices d'injection de combustible (152) dans le gaz actif aspiré dans le cylindre (110) par les orifices de balayage (118) ; et
une unité de réglage de degré d'ouverture (154) qui change mécaniquement ou électriquement un degré d'ouverture des orifices d'injection de combustible (152) selon une valeur d'un paramètre qui varie conjointement avec une pression de balayage (Psc) ou selon la pression de balayage (Psc),
**caractérisé en ce que** :
un tuyau principal de gaz combustible (138) communique avec un réservoir de combustible, et communique également avec un tuyau toroïdal (142) via un dispositif d'injection de combustible (140),
lorsqu'une soupape de dispositif d'injection de combustible (140) est ouverte, le gaz combustible à l'intérieur du tuyau principal de gaz combustible (138) s'écoule dans le tuyau toroïdal (142),
le tuyau toroïdal (142) est disposé sur un côté supérieur des orifices de balayage (118) sur un côté externe dans une direction radiale du cylindre (110), et s'étend, de manière toroïdale dans une direction circonférentielle du cylindre (110) afin d'encercler le cylindre (110),
les unités d'injection de combustible (144) sont fixées du côté de l'orifice de balayage (118) du tuyau toroïdal (142),
les unités d'injection de combustible (144) sont prévues avec :
un tuyau interne (148) dans lequel des trous internes (148b) sont formés, les trous internes (148b) pénétrant d'une partie interne du tuyau interne (148) jusqu'à sa partie externe, et le tuyau interne (148) dans lequel le gaz combustible est guidé vers la partie interne par le tuyau toroïdal (142) ; et
un tuyau externe (150) dans lequel des trous externes (150b) sont formés, les trous externes (150b) pénétrant d'une partie interne du tuyau externe (150) jusqu'à sa partie externe, et le tuyau externe (150) logeant intérieurement le tuyau interne (148) et formant un double tuyau conjointement avec le tuyau interne (148),
les orifices d'injection de combustible (152) sont formés par les trous internes (148b) et les trous externes (150b), et
le degré d'ouverture peut être modifié en utilisant un chevauchement mutuel des trous internes (148b) et des trous externes (150b).

2. Moteur à gaz (100) selon la revendication 1, dans lequel l'unité de réglage de degré d'ouverture (154) augmente le degré d'ouverture des orifices d'injection de combustible (152) lorsque la pression d'air de balayage (Psc) monte, et diminue le degré d'ouverture des orifices d'injection de combustible (152) lorsque la pression d'air de balayage (Psc) chute.

3. Moteur à gaz (100) selon la revendication 1, comprenant en outre :
une partie de réception de pression (162) qui reçoit la pression de balayage dans une position dans un espace de balayage, la position étant plus éloignée que les orifices d'injection de combustible (152) des orifices de balayage (118), et un espace de balayage entourant une partie du cylindre (110) et par le biais duquel le gaz actif comprimé est guidé, et
l'unité de réglage de degré d'ouverture (154) modifie le degré d'ouverture des orifices d'injection de combustible (152) en utilisant des changements de pression différentielle entre une pression atmosphérique et la pression de balayage reçue par la partie de réception de pression (162).

4. Moteur à gaz (100) selon la revendication 2, comprenant en outre :
une partie de réception de pression (162) qui reçoit la pression de balayage dans une position dans un espace de balayage, la position étant plus éloignée que les orifices d'injection de combustible (152) des orifices de balayage (118), et l'espace de balayage entourant une partie du cylindre (110) et par le biais duquel le gaz actif comprimé est guidé, et
l'unité de réglage de degré d'ouverture (154) modifie le degré d'ouverture des orifices d'injection de combustible (152) en utilisant des changements de pression différentielle entre une pression atmosphérique et la pression de balayage reçue par la partie de réception de pression (162).

5. Moteur à gaz (100) selon la revendication 1, comprenant en outre :
une unité d'acquisition de données (266) qui acquiert la valeur du paramètre, et
l'unité de réglage de degré d'ouverture (154) a un actionneur qui modifie le degré d'ouverture des orifices d'injection de combustible (152) selon la valeur du paramètre acquise par l'unité d'acquisition de données (266).

6. Moteur à gaz (100) selon la revendication 2, comprenant en outre :
une unité d'acquisition de données (266) qui acquiert la valeur du paramètre, et
l'unité de réglage de degré d'ouverture (154) a un actionneur qui modifie le degré d'ouverture des orifices d'injection de combustible (152) selon la valeur du paramètre acquise par l'unité d'acquisition de données (266).

7. Moteur à gaz (100) selon la revendication 3, dans lequel le tuyau interne (148) et le tuyau externe (150) sont adaptés pour tourner relativement l'un par rapport à l'autre dans une direction circonférentielle et pour modifier le degré d'ouverture des orifices d'injection de combustible (152).
